# EUROPEAN PATENT APPLICATION

(11) **EP 4 589 812 A1**
(43) Date of publication of application: **23.07.2025**
(21) Application number: 25151329.7
(22) Date of filing: 10.01.2025
(51) Int. Cl.: H02K 1/16, H02K 19/00

(54) **ELECTRICALLY EXCITED SYNCHRONOUS MOTOR, DRIVE SYSTEM AND VEHICLE**

(30) Priority: 19.01.2024 CN 202420143388 U
(71) Applicant: Valeo eAutomotive Germany GmbH, 91056 Erlangen (DE)
(72) Inventor: CHEN, Qingfeng, 91056 Erlangen (DE); CHANG, Siyuan, 91056 Erlangen (DE); ZHANG, Xing, 91056 Erlangen (DE); ZHANG, Long, 91056 Erlangen (DE); HU, Xiaobin, 91056 Erlangen (DE)
(74) Representative: Valeo Powertrain Systems

(57) **Abstract**

The present disclosure relates to an electrically excited synchronous motor (1), including: a stator (10), including a stator core (11) and a stator winding (12), wherein the stator core (11) is provided with a plurality of stator slots (13) uniformly distributed around a rotational axis (X) of the electrically excited synchronous motor (1), and the stator winding (12) is accommodated in the stator slots (13); and a rotor (20), including a rotor core (21) and a rotor excitation winding (22). The stator slots (13) are inclined relative to the rotational axis (X) at a predetermined inclination angle. The present disclosure further relates to a drive system, including such an electrically excited synchronous motor (1). The present disclosure further relates to a vehicle, including such a drive system.

## Description

### Technical Field

The present disclosure relates to an electrically excited synchronous motor. In particular, stator slots of the electrically excited synchronous motor are inclined relative to a rotational axis at a predetermined inclination angle. The present disclosure further relates to a drive system comprising such an electrically excited synchronous motor and a vehicle comprising such a drive system.

### Background Art

A stator and a rotor of an electrically excited synchronous motor (EESM) both have a tooth slot structure. A stator winding is accommodated in stator slots, and a rotor excitation winding is wound around rotor pole teeth. Due to the presence of slots in both rotor and stator magnetic circuits, the rotor has different magnetic permeance values at different angular positions. Therefore, when rotating to certain specific positions, the rotor encounters resistance that hinders its rotation, thereby generating a periodic cogging torque. The cogging torque of the electrically excited synchronous motor causes fluctuations in a driving torque output thereby during operation, and causes the motor to generate vibration and noise by itself. In particular, for a vehicle driven by an electrically excited synchronous motor, the cogging torque of the electrically excited synchronous motor causes overall noise, vibration and harshness (NVH) problems for the vehicle.

### Summary

Therefore, the present disclosure is intended to solve the above problems, and an objective thereof is to provide an electrically excited synchronous motor, a drive system comprising such an electrically excited synchronous motor and a vehicle comprising such a drive system. The electrically excited synchronous motor according to the present disclosure can suppress the cogging torque, reduce the vibration and noise generated by the cogging torque, and thus improve the NVH performance of vehicles.

The objective is achieved by an electrically excited synchronous motor according to an embodiment of the present disclosure. The electrically excited synchronous motor comprises: a stator, comprising a stator core and a stator winding, wherein the stator core is provided with a plurality of stator slots uniformly distributed around a rotational axis of the electrically excited synchronous motor, and the stator winding is accommodated in the stator slots; and a rotor, comprising a rotor core and a rotor excitation winding. The stator slots are inclined relative to the rotational axis at a predetermined inclination angle.

One of the objectives of the present disclosure is to provide an electrically excited synchronous motor that can suppress cogging torque. The stator slots of the stator of the electrically excited synchronous motor according to the present disclosure are inclined relative to the rotational axis of the motor, and the stator winding accommodated therein are naturally inclined following the stator slots. The direction of the stator slots and the stator winding is no longer parallel to the direction of the rotor excitation winding. During rotation, the rotor excitation winding is staggered with multiple stator slots at the same time, instead of being aligned or misaligned with a single stator slot. The magnetic permeance value of a magnetic circuit of the electrically excited synchronous motor decreases with periodic fluctuations of rotation of the rotor. Thus, the cogging torque of the electrically excited synchronous motor is suppressed, the fluctuation of the torque output is weakened, and the vibration and noise caused thereby are reduced, thereby improving the NVH performance of vehicles.

The electrically excited synchronous motor according to the present disclosure may also have one or more of the following features, alone or in combination.

According to an embodiment of the present disclosure, the stator core comprises a plurality of stator laminations stacked together in sequence, and the stator laminations are provided with slot holes for forming the stator slots.

According to an embodiment of the present disclosure, any one stator lamination among the plurality of stator laminations is rotated by a first rotation angle in a circumferential direction relative to a previous stator lamination. Thus, the slot holes of this stator lamination are no longer completely aligned with the slot holes of the previous stator lamination, but are staggered by the first rotation angle in the circumferential direction. A plurality of slot holes are sequentially connected to form a stator slot that is inclined relative to the rotational axis.

According to an embodiment of the present disclosure, the stator core is provided with n stator slots, where n is a positive integer greater than or equal to 1, and the rotation angle of the last stator lamination among the plurality of stator laminations relative to the first stator lamination is between 0° and 720°/n. Preferably, the rotation angle of the last stator lamination relative to the first stator lamination is 360°/n. Thus, the position of a slot hole of the last stator lamination in the circumferential direction just corresponds to the previous slot hole of the first stator lamination.

According to an embodiment of the present disclosure, the stator core defines, in a radial inner portion thereof, an accommodation space for accommodating the rotor, and the stator slots comprise opening portions leading to the accommodation space, and the opening portions are inclined at a first inclination angle relative to the rotational axis.

According to an embodiment of the present disclosure, the stator winding comprises a plurality of winding conductors, and the winding conductors have main body portions inserted into the stator slots and inclined relative to the rotational axis. As an example, the winding conductor is an integrally formed flat wire conductor.

According to an embodiment of the present disclosure, the plurality of winding conductors comprise at least one or more of a first winding conductor, a second winding conductor and a third winding conductor. The first winding conductor comprises the main body portion and winding end portions located at two ends of the main body portion; the second winding conductor comprises two main body portions respectively inserted into different stator slots, a connecting portion located at one end of each of the main body portions and connecting the two main body portions together, and two winding end portions respectively located at the other ends of the two main body portions; and the third winding conductor comprises a plurality of main body portions respectively inserted into different stator slots, wherein one main body portion is sequentially connected to front and rear main body portions at two ends thereof through connecting portions.

According to an embodiment of the present disclosure, the electrically excited synchronous motor further comprises an insulating member inserted into the stator slot and accommodating the stator winding, wherein the insulating member is configured to fit the stator core in the stator slot.

According to an embodiment of the present disclosure, the insulating member is formed by folding insulating paper and has a twisted hexahedral shape.

The present disclosure further relates to a drive system, comprising the electrically excited synchronous motor as described above.

The present disclosure further relates to a vehicle, comprising the drive system as described above.

### Brief Description of the Drawings

The foregoing and other features and advantages of the present disclosure will become more apparent from the following detailed description of exemplary embodiments with reference to the accompanying drawings, and the description and the accompanying drawings are for illustrative purposes only and are not intended to limit the scope of the present disclosure in any way. The drawings below are not scaled drawings according to actual dimensions but rather focus on showing the main purpose of the present disclosure.
Fig. 1 shows an electrically excited synchronous motor according to an embodiment of the present disclosure;

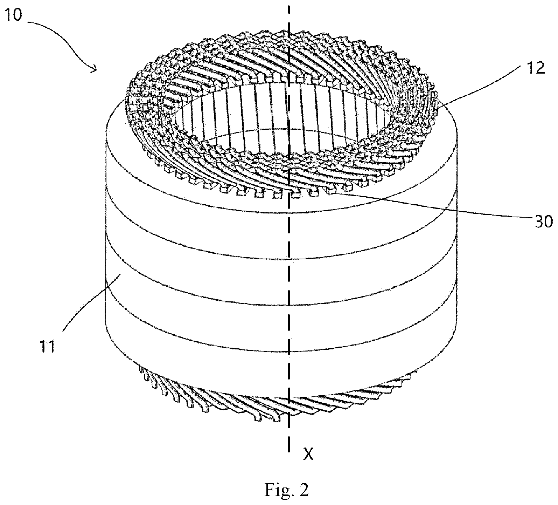

Fig. 2 shows a stator of the electrically excited synchronous motor;
Fig. 3A shows a stator core of the stator shown in Fig. 2, Fig. 3B shows an inclined stator slot in an enlarged view, and Fig. 3C shows an opening portion of the stator slot;
Fig. 4A shows a stator lamination constituting the stator core, and Fig. 4B is an enlarged view of a part of the stator lamination;
Fig. 5A to Fig. 5C show winding conductors constituting a stator winding; and
Fig. 6A shows an insulating member inserted into a stator slot, and Fig. 6B shows insulating paper used for being folded to form the insulating member.

In the drawings, identical or similar components are indicated by identical reference numerals.

### Detailed Description of the Embodiments

To clarify the objective, technical solutions and advantages of embodiments of the present disclosure, the technical solutions of the embodiments of the present disclosure are described clearly and completely below in conjunction with the drawings of the embodiments of the present disclosure. Obviously, the described embodiments are some rather than all of the embodiments of the present disclosure.

Unless defined otherwise, the technical or scientific terms used herein shall have the common meanings as understood by those of ordinary skill in the field to which the present disclosure belongs. "One", "a" or "said" and similar words used in the description and claims of the patent application of the present disclosure do not indicate a quantity limit, but mean that there is at least one. Words such as "comprise" or "include" mean that the element or object appearing before the word includes the elements or objects and equivalents thereof listed after the word but does not exclude other elements or objects. Words such as "first" and "second" used in the description and claims of the patent application disclosed herein do not denote any order, quantity or importance, and are merely used to distinguish different component parts. "Upper", "lower", "left", "right", etc., are only used to indicate a relative positional relationship, and when the absolute position of the described object changes, the relative positional relationship might also change accordingly. The terms "axial" and "axial direction" refer to the direction of a rotational axis X, the terms "radial" and "radial direction" refer to the direction perpendicular to the rotational axis X, and the terms "circumferential" and "circumferential direction" refer to the circumferential direction around the rotational axis X.

Embodiments according to the present disclosure are described in detail with reference to the drawings. Here, it should be noted that in the accompanying drawings, identical reference numerals are assigned to components that have substantially identical or similar structures and functions, and repeated descriptions about them will be omitted.

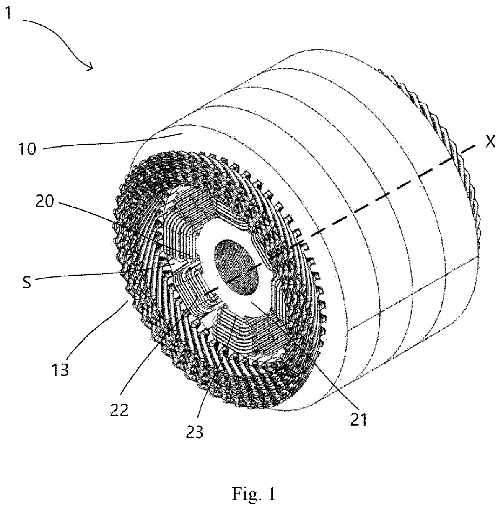

Fig. 1 shows an electrically excited synchronous motor 1 according to an embodiment of the present disclosure, which comprises a stator 10 and a rotor 20. The rotor 20 is accommodated in an accommodation space S located radially inside the stator 10, and can be driven to rotate around a rotational axis X of the electrically excited synchronous motor 1.

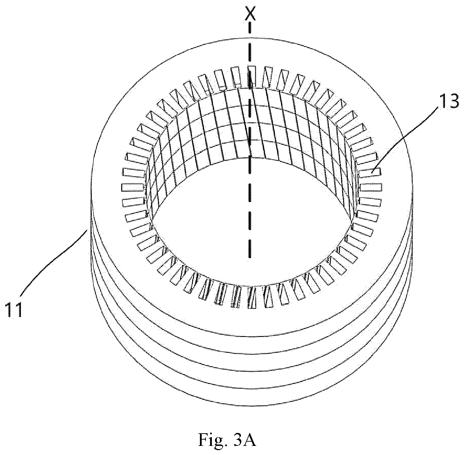

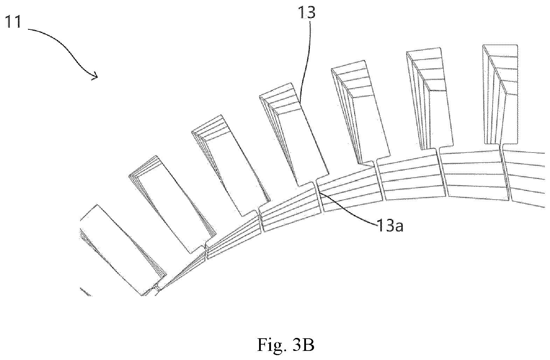

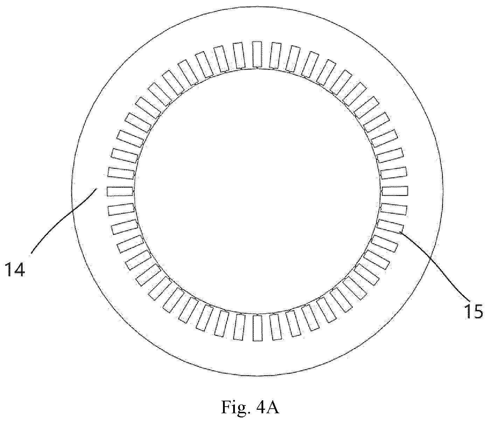

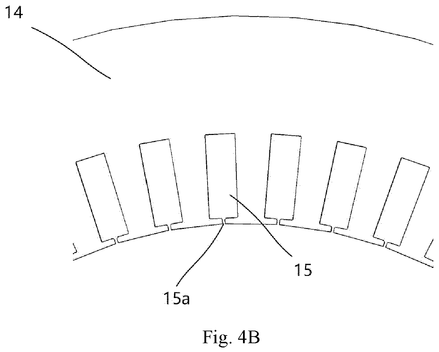

Specifically, the stator 10 comprises a stator core 11 and a stator winding 12. As shown in Fig. 3A, the stator core 11 is provided with a plurality of stator slots 13 uniformly distributed around the rotational axis X of the electrically excited synchronous motor 1, and the stator winding 12 is accommodated in the stator slots 13. The accommodation space S for accommodating the rotor 20 is defined in a radial inner portion of the stator core 11. The stator slot 13 further comprises an opening portion 13a leading to the accommodation space S. As an example, the stator core 11 is composed of a plurality of stator laminations 14 stacked together in sequence. As shown in Fig. 4A and Fig. 4B, each stator lamination 14 is provided with slot holes 15, and the slot hole 15 comprises an opening 15a leading to a radial inner portion of the stator lamination 14. The opening 15a is, for example, located at a middle position of the width direction of the slot hole 15. When a plurality of stator laminations 14 are stacked together, a plurality of slot holes 15 form a stator slot 13, and a plurality of openings 15a form the opening portion 13a of the stator slot 13. The opening portion 13a is located at a middle position of the stator slot 13, for example.

The rotor 20 comprises a rotor core 21 and a rotor excitation winding 22. The rotor core 21 comprises a plurality of pole teeth 23 uniformly distributed around the rotational axis X. The rotor excitation winding 22 is wound around the pole teeth 23. During operation, the stator winding 12 generates a rotating stator magnetic field, and the rotor excitation winding 22 generates a rotor magnetic field. The rotor magnetic field interacts with the stator magnetic field to generate a rotation torque, driving the rotor 20 to rotate around the rotational axis X.

In a conventional electrically excited synchronous motor, a plurality of stator laminations 14 are aligned with each other in a completely overlapping manner, thereby forming stator slots parallel to the rotational axis X of the electrically excited synchronous motor, and opening portions parallel to the rotational axis X of the electrically excited synchronous motor 1. Similarly, a longitudinal direction of the rotor excitation winding 22 of the rotor 20 is also parallel to the rotational axis X of the electrically excited synchronous motor 1. In this way, when the rotor 20 rotates, the angular position of the rotor excitation winding 22 relative to the stator slot 13 changes periodically. At a specific angular position, the rotor may encounter resistance that hinders its rotation, generating a periodic cogging torque, so that the driving torque output by the electrically excited synchronous motor fluctuates and is no longer smooth. When the electrically excited synchronous motor is used to drive a vehicle, this cogging torque may cause vibration of the electrically excited synchronous motor and have a negative impact on the overall NVH of the vehicle.

In order to suppress such a cogging torque, in the electrically excited synchronous motor 1 according to the present disclosure, it is particularly proposed that the stator slot 13 is arranged obliquely. In particular, as shown in Fig. 3A, the stator slot 13 is inclined at a predetermined inclination angle relative to the rotational axis X of the electrically excited synchronous motor 1. The stator winding 12 accommodated in the stator slot 13 is also inclined accordingly. In this way, the rotor excitation winding 22, especially the rotor excitation winding 22 arranged parallel to the rotational axis X, will not be aligned with a single stator slot 13 in the circumferential direction, but will be staggered with a plurality of stator slots 13. Thus, the structure of the electrically excited synchronous motor 1, especially the magnetic structure, becomes more uniform in the circumferential direction, the resistance to the rotation of the rotor 20 at a specific angular position is weakened, and the cogging torque is suppressed.

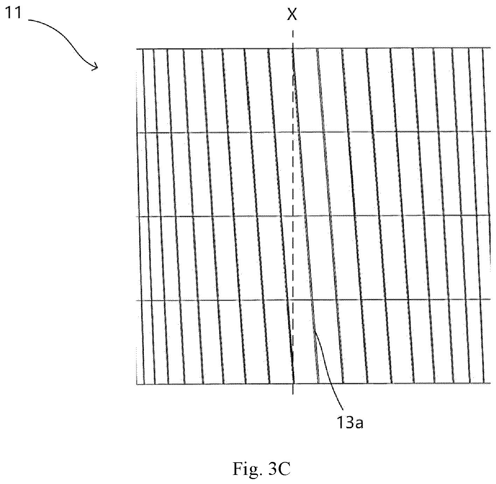

Such inclined stator slots 13 can be realized in a variety of ways. As an example, such inclined stator slots 13 are realized by rotating the stator laminations 14. For example, any one of the stator laminations 14 forming the stator core 11 is rotated by a first rotation angle in the circumferential direction relative to the previous one. The plurality of stator laminations 14 constituting the stator core 11 are stacked together, and the slot holes 15 thereof form stator slots 13 inclined relative to the rotational axis X. Similarly, referring to Fig. 3C, the opening 15a of the slot hole 15 forms an opening portion 13a inclined at a first inclination angle relative to the rotational axis X.

As an example, the first rotation angle of the stator lamination 14 is set so that a slot hole 15 of the last stator lamination 14 among the plurality of stator laminations 14 is aligned with the next slot hole 15 of the first stator lamination 14. Thus, the ending position of the inclined stator slot 13 formed by the slot hole 15 corresponds to the starting position of the next stator slot 13 in the circumferential direction. Referring to Fig. 3C, the ending position of the opening portion 13a of any stator slot 13 corresponds to the starting position of the opening portion 13a of the next stator slot 13. That is, for the provision of n stator slots 13 (n is a positive integer greater than or equal to 1), the rotation angle of the last stator lamination 14 among the plurality of stator laminations 14 relative to the first stator lamination 14 is 360°/n. It should be understood that the rotation angle 360°/n of the last stator lamination 14 relative to the first stator lamination 14 is only a preferred embodiment of the present disclosure, and the above rotation angle may be between 0° and 720°/n.

The stator winding 12 of the stator 10 is composed of one or more winding conductors 16 connected together. The winding conductor 16 may be an integrally formed flat wire conductor, and may have a variety of configurations.

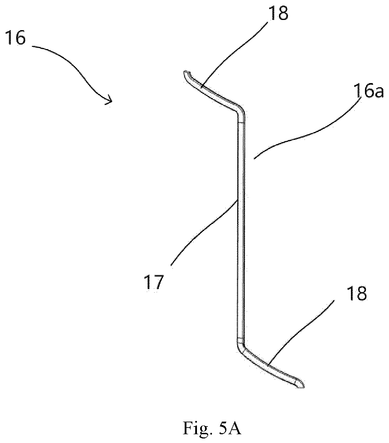

As shown in Fig. 5A, the winding conductor 16 forming at least a part of the stator winding 12 may be a first winding conductor 16a in the form of an I-pin. The first winding conductor 16a is provided with a main body portion 17 and winding end portions 18 located at two ends of the main body portion 17. The main body portion 17 is inserted into the stator slot 13 and inclined relative to the rotational axis X, thereby forming a stator winding 12 inclined relative to the rotational axis X. The winding conductor 16 may be formed only by first winding conductors 16a, and adjacent first winding conductors 16a are connected together through winding end portions 18, for example, winding end portions 18 welded together.

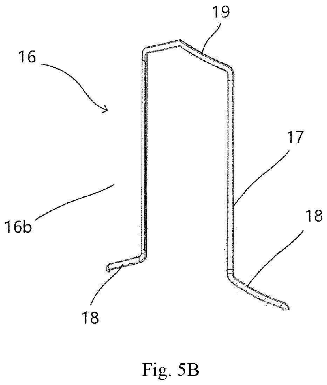

As shown in Fig. 5B, the winding conductor 16 forming at least a part of the stator winding 12 may also be a second winding conductor 16b in the form of a U-pin. The second winding conductor 16b is provided with two main body portions 17 respectively inserted in different stator slots 13, a connecting portion 19 located at one end of each of the main body portions 17 to connect the two main body portions 17 together, and two winding end portions 18 respectively located at the other ends of the two main body portions 17. In particular, the two main body portions 17 of the second winding conductor 16b are accommodated in two stator slots 13 that are not adjacent to each other, and are inclined relative to the rotational axis X, thereby forming the stator winding 12 inclined relative to the rotational axis X. The winding conductor 16 may be formed only by second winding conductors 16b, and adjacent second winding conductors 16b are connected together through winding end portions 18, for example, winding end portions 18 welded together. Optionally, the winding conductor 16 may comprise both the first winding conductor 16a and the second winding conductor 16b. The first winding conductor 16a and the second winding conductor 16b may likewise be connected together through winding end portions 18 welded together.

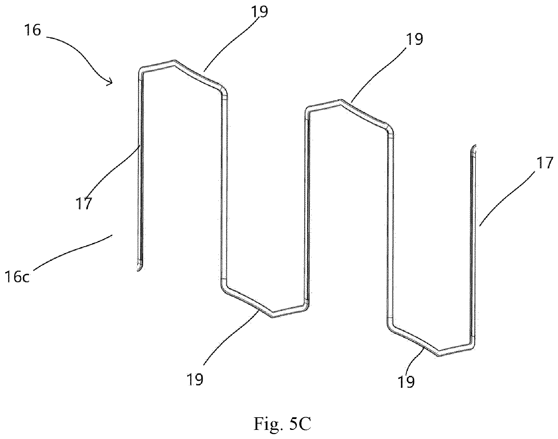

As shown in Fig. 5C, the winding conductor 16 forming at least a part of the stator winding 12 may also be a third winding conductor 16c in the form of a W-pin. The third winding conductor 16c is provided with a plurality of main body portions 17 respectively inserted in different stator slots 13, wherein one main body portion 17 is sequentially connected to front and rear main body portions 17 at two ends thereof through a connecting portion 19. In particular, the main body portion 17 of the third winding conductor 16c is accommodated in the stator slot 13 and is inclined relative to the rotational axis X, thereby forming the stator winding 12 inclined relative to the rotational axis X. The winding conductor 16 may be formed only by third winding conductors 16c. A single third winding conductor 16c may completely form a phase winding in the stator winding 12. Optionally, the winding conductor 16 may comprise the third winding conductor 16c and one or more of the first winding conductor 16a and the second winding conductor 16b. That is, the plurality of winding conductors 16 forming the stator winding 12 may comprise one or more of the first winding conductor 16a, the second winding conductor 16b, and the third winding conductor 16c. In each winding conductor, most or all of the main body portion 17 is accommodated in the stator slot 13, and the connecting portion or the winding end portion is arranged outside the stator slot 13.

When assembling the stator 10, preferably, the stator slots 13 of the stator core 11 are first arranged obliquely. For example, the stator slots 13 are inclined by rotating the stator laminations 14. Then, the winding end portions 18 of the first winding conductor 16a and/or the second winding conductor 16b are inserted from above or below the stator core 11, so that the main body portion 17 is positioned in the stator slot 13. For the third winding conductor 16c, the main body portion 17 may be inclined to correspond to the opening portion 13a of the stator slot 13, and inserted into the stator slot 13 from a radial direction through the opening portion 13a.

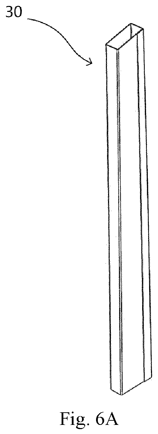

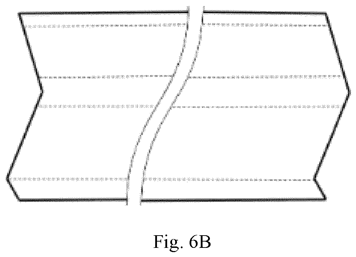

The stator winding 12 accommodated in the stator slot 13 is insulated from the stator core 11 by an insulating member 30. The insulating member 30 is inserted into the stator slot 13 and accommodates the stator winding 12, in particular, the main body portion 17 of the stator winding 12. The insulating member 30 is configured to fit the stator core 11 in the stator slot 13. The insulating member 30 is formed by folding insulating paper, for example. Referring to Fig. 6A, the insulating member 30 has a twisted parallelepiped shape, so as to adapt to the inclined stator slot 13. The insulating member 30 with this twisted parallelepiped shape may be formed by folding insulating paper having the polygonal shape as shown in Fig. 6B. It can be understood that the shape of the insulating member 30 and the shape of the insulating paper forming the insulating member 30 are not limited to the embodiments shown in Fig. 6A and Fig. 6B, but may have different shapes.

According to another aspect of the present disclosure, a drive system is proposed. The drive system comprises the electrically excited synchronous motor 1 as described previously.

According to another aspect of the present disclosure, a vehicle is proposed. The vehicle comprises a drive system as described previously. The vehicle may be an electrified vehicle, for example, a battery electric vehicle (BEV), a hybrid electric vehicle (HEV), a plug-in hybrid electric vehicle (PHEV), a range extended EV, or a fuel cell electric vehicle (FCEV). The vehicle may also be a hydrogen-powered vehicle. On the basis of the above, the vehicle may realize the functions of the electrically excited synchronous motor 1 as described previously, and have the advantages as described previously.

The above is a description of the present disclosure and should not be regarded as limiting it. Although several exemplary embodiments of the present disclosure have been described, those skilled in the art will easily understand that many modifications can be made to the exemplary embodiments without departing from the novel teaching and advantages of the present disclosure. Therefore, all such modifications are intended to be comprised in the scope of the present disclosure as defined by the claims. It should be understood that the above is a description of the present disclosure; the present disclosure should not be considered to be limited to the specific embodiments disclosed, and modifications to the disclosed embodiments and other embodiments are intended to be comprised within the scope of the present disclosure.

## Claims

1. An electrically excited synchronous motor (1), comprising:
a stator (10) comprising a stator core (11) and a stator winding (12), wherein the stator core (11) is provided with a plurality of stator slots (13) uniformly distributed around a rotational axis (X) of the electrically excited synchronous motor (1), and the stator winding (12) is accommodated in the stator slots (13); and
a rotor (20) comprising a rotor core (21) and a rotor excitation winding (22);
wherein the stator slot (13) is inclined relative to the rotational axis (X) at a predetermined inclination angle.

2. The electrically excited synchronous motor (1) according to claim 1, wherein
the stator core (11) comprises a plurality of stator laminations (14) stacked together in sequence, and the stator laminations (14) are provided with slot holes (15) for forming the stator slots (13).

3. The electrically excited synchronous motor (1) according to claim 2, wherein
any one stator lamination (14) among the plurality of stator laminations (14) is rotated by a first rotation angle in a circumferential direction relative to a previous stator lamination (14).

4. The electrically excited synchronous motor (1) according to claim 3, wherein
the stator core (11) is provided with n stator slots (13), wherein n is a positive integer greater than or equal to 1, and the rotation angle of the last stator lamination (14) among the plurality of stator laminations (14) relative to the first stator lamination (14) is between 0° and 720°/n.

5. The electrically excited synchronous motor (1) according to any one of claims 1 to 4, wherein
the stator core (11) defines, in a radial inner portion thereof, an accommodation space (S) for accommodating the rotor (20), and
the stator slots (13) comprise opening portions (13a) leading to the accommodation space (S), and the opening portions (13a) are inclined at a first inclination angle relative to the rotational axis (X).

6. The electrically excited synchronous motor (1) according to any one of claims 1 to 4, wherein
the stator winding (12) comprises a plurality of winding conductors (16), and the winding conductors (16) comprise main body portions (17) inserted into the stator slots (13) and inclined relative to the rotational axis (X).

7. The electrically excited synchronous motor (1) according to claim 6, wherein
the plurality of winding conductors (16) comprise at least one or more of a first winding conductor (16a), a second winding conductor (16b) and a third winding conductor (16c), wherein
the first winding conductor (16a) comprises the main body portion (17) and winding end portions (18) located at two ends of the main body portion (17);
the second winding conductor (16b) comprises two main body portions (17) respectively inserted into different stator slots (13), a connecting portion (19) located at one end of each of the main body portions (17) and connecting the two main body portions (17) together, and two winding end portions (18) respectively located at the other ends of the two main body portions (17); and
the third winding conductor comprises a plurality of main body portions (17) respectively inserted into different stator slots (13), wherein one main body portion (17) is sequentially connected to front and rear main body portions (17) at two ends thereof through connecting portions (19).

8. The electrically excited synchronous motor (1) according to any one of claims 1 to 4, further comprising: an insulating member (30) inserted into the stator slot (13) and accommodating the stator winding (12), wherein the insulating member (30) is configured to fit the stator core (11) in the stator slot (13).

9. The electrically excited synchronous motor (1) according to claim 8, wherein
the insulating member (30) is formed by folding insulating paper and has a twisted hexahedral shape.

10. A drive system, comprising the electrically excited synchronous motor (1) according to any one of claims 1 to 9.

11. A vehicle, comprising the drive system according to claim 10.
